(19) **Europäisches Patentamt / European Patent Office / Office européen des brevets**

(11) **EP 3 362 282 B1**

(12) **FASCICULE DE BREVET EUROPEEN**

(45) Date de publication et mention de la délivrance du brevet:
**01.01.2020 Bulletin 2020/01**

(21) Numéro de dépôt: **16787506.1**

(22) Date de dépôt: **06.10.2016**

(51) Int Cl.:
**B32B 15/01** (2006.01)  **B62D 29/00** (2006.01)
**C22C 21/02** (2006.01)  **C22F 1/043** (2006.01)
**C22F 1/05** (2006.01)

(86) Numéro de dépôt international:
**PCT/FR2016/052577**

(87) Numéro de publication internationale:
**WO 2017/064396 (20.04.2017 Gazette 2017/16)**

(54) **COMPOSANT DE STRUCTURE DE CAISSE AUTOMOBILE PRESENTANT UN EXCELLENT COMPROMIS ENTRE RESISTANCE MECANIQUE ET COMPORTEMENT AU CRASH**

STRUKTURBAUTEIL EINER KRAFTFAHRZEUGSCHALE ZUR BEREITSTELLUNG EINES HERVORRAGENDEN KOMPROMISSES ZWISCHEN MECHANISCHER FESTIGKEIT UND CRASHFESTIGKEIT

STRUCTURAL COMPONENT OF A MOTOR VEHICLE SHELL OFFERING AN EXCELLENT COMPROMISE BETWEEN MECHANICAL STRENGTH AND CRASH RESISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2015 FR 1559674**

(43) Date de publication de la demande:
**22.08.2018 Bulletin 2018/34**

(73) Titulaire: **Constellium Neuf-Brisach**
**68600 Biesheim (FR)**

(72) Inventeurs:
• **MULLER, Estelle**
**38000 Grenoble (FR)**
• **REBUFFET, Olivier**
**38000 Grenoble (FR)**
• **DELGRANGE, Guillaume**
**38100 Grenoble (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
**EP-A1- 2 581 218**    **WO-A1-2013/121876**
**FR-A1- 2 826 979**    **JP-A- 2001 262 264**

• **MIKE MURPHY: "Aluminum Growth in Auto Body Today to 2020", INTERNET CITATION, 24 octobre 2012 (2012-10-24), pages 1-11, XP002722930, Extrait de l'Internet: URL:http://www.drivealuminum.org/research-resources/PDF/Speeches%20and%20Presentatio ns/2012/Aluminum-Growth-in-Auto-Body-Today -to-2020-Murphy.pdf [extrait le 2014-04-07]**

**Description**

**Domaine de l'invention**

L'invention concerne le domaine des pièces ou composants de structure automobile encore appelée « caisse en blanc », fabriqués notamment par emboutissage de tôles en alliage d'aluminium, plus particulièrement en alliages de la série AA6xxx selon la désignation de l' « Aluminum Association », destinées à absorber de l'énergie de façon irréversible lors d'un choc, et présentant un excellent compromis entre résistance mécanique élevée et bon comportement au « crash », tels que notamment des absorbeurs de choc ou « crashboxes », pièces de renfort, de doublure, ou autres pièces de structure de caisse.

Plus précisément, l'invention porte sur la fabrication de tels composants par emboutissage dans un état mis solution trempé et mûri suivi d'un durcissement par revenu sur pièce et d'un traitement de cuisson des peintures ou « bake hardening ».

**Etat de la technique**

En préambule, tous les alliages d'aluminium dont il est question dans ce qui suit sont désignés, sauf indication contraire, selon les désignations définies par l' « Aluminum Association » dans les « Registration Record Series » qu'elle publie régulièrement.

Toutes les indications concernant la composition chimique des alliages sont exprimées comme un pourcentage en poids basé sur le poids total de l'alliage. L'expression 1,4 x Si signifie que la teneur en silicium exprimée en % en poids est multipliée par 1,4.

Les définitions des états métallurgiques sont indiquées dans la norme européenne EN 515.

Les caractéristiques mécaniques statiques en traction, en d'autres termes la résistance à la rupture $R_m$, la limite d'élasticité conventionnelle à 0,2% d'allongement $Rp_{0,2}$, et l'allongement à la rupture A%, sont déterminées par un essai de traction selon la norme NF EN ISO 6892-1.

Les angles de pliage, appelés alpha norm, sont déterminés par essai de pliage 3-points selon la norme NF EN ISO 7438 et les procédures VDA 238-100 et VDA 239-200.

Les alliages d'aluminium sont utilisés de manière croissante dans la construction automobile pour réduire le poids des véhicules et ainsi diminuer la consommation de carburant et les rejets de gaz à effet de serre.

Les tôles en alliage d'aluminium sont utilisées notamment pour la fabrication de nombreuses pièces de la « caisse en blanc » parmi lesquelles on distingue les pièces de peau de carrosserie (ou panneaux extérieurs de carrosserie) comme les ailes avant, toits ou pavillons, peaux de capot, de coffre ou de porte, et les pièces de doublure ou composants de structure de caisse comme par exemple les doublures ou renforts de porte, de capot, de hayon, de pavillon, ou encore les longerons, les tabliers, les planchers de charges, les tunnels et les pieds avant, milieu et arrière, enfin les absorbeurs de choc ou « crashboxes ».

Si de nombreuses pièces de peau sont déjà réalisées en tôles d'alliages d'aluminium, la transposition de l'acier à l'aluminium de pièces de doublure ou de structure présentant des géométries complexes s'avère plus délicate. D'une part du fait de la moins bonne formabilité des alliages d'aluminium par rapport aux aciers et d'autre part du fait des caractéristiques mécaniques en général moins élevées que celles des aciers utilisés pour ce type de pièces.

En effet, ce type d'application requiert un ensemble de propriétés, parfois antagonistes telles que :

- une formabilité élevée à l'état de livraison, état T4, en particulier pour les opérations d'emboutissage,
- une limite d'élasticité contrôlée à l'état de livraison de la tôle pour maîtriser le retour élastique lors de la mise en forme,
- un bon comportement dans les divers procédés d'assemblage utilisés en carrosserie automobile tels que le soudage par points, le soudage laser, le collage, le clinchage ou le rivetage,
- une résistance mécanique élevée après cataphorèse et cuisson des peintures pour obtenir une bonne résistance mécanique en service tout en minimisant le poids de la pièce,
- une bonne capacité à l'absorption d'énergie en cas de choc pour application à des pièces de structure de caisse,
- une bonne résistance à la corrosion, notamment la corrosion intergranulaire, la corrosion sous contrainte et la corrosion filiforme de la pièce finie,
- une compatibilité avec les exigences du recyclage des déchets de fabrication ou des véhicules recyclés,
- un coût acceptable pour une production en grande série.

Il existe cependant d'ores et déjà des véhicules automobiles de grande série disposant d'une caisse en blanc constituée majoritairement d'alliages aluminium. Par exemple le modèle Ford F-150 version 2014 est constitué de l'alliage de structure AA6111. Cet alliage a été développé par le groupe « Alcan » dans les années 1980-1990. Deux références décrivent ces travaux de développement :

- P. E. Fortin et al, "An optimized Al alloy for Auto body sheet applications", SAE technical conference, March 1984 décrit la composition suivante :

| [Fortin] | Si | Fe | Cu | Mn | Mg | Cr | Zn | Ti |
|---|---|---|---|---|---|---|---|---|
| AA6111 | 0,85 | 0,20 | 0,75 | 0,20 | 0,72 | - | - | - |

- M. J. Bull et al, "Al sheet alloys for structural and skin applications", 25th ISATA symposium, Paper 920669, June 1992: La propriété principale reste une forte résistance mécanique, même si elle est initialement prévue pour résister à l'indentation pour des applications du type peaux : « A yield-strength of 280 MPa is achieved after 2% pre-strain and 30 min at 177°C ».

D'autre part, d'autres alliages de la famille AA6xxx à hautes caractéristiques mécaniques ont été développés pour des applications aéronautiques ou automobiles. Ainsi, l'alliage du type AA6056, dont le développement date des années 1980 chez « Pechiney » a fait l'objet de nombreux travaux et de nombreuses publications, soit pour optimiser les caractéristiques mécaniques, soit pour améliorer la tenue à la corrosion intergranulaire. Nous retiendrons l'application automobile de ce type d'alliage, qui a fait l'objet d'une demande de brevet (WO2004113579A1).

Les alliages du type AA6013 ont également fait l'objet de nombreux travaux. Par exemple, chez « Alcoa », dans la demande US2002039664 publiée en 2002, un alliage comprenant 0.6-1.15% Si; 0.6-1% Cu ; 0.8-1.2% Mg ; 0.55-0.86% Zn ; moins de 0.1% Mn ; 0.2-0.3% Cr et environ 0.2% Fe, utilisé à l'état T6, combine une bonne résistance à la corrosion intergranulaire, ainsi qu'un $Rp_{0,2}$ de 380 MPa.

Chez « Aleris », une demande publiée en 2003, WO03006697, a pour objet un alliage de la série AA6xxx avec 0.2 à 0.45% de Cu. L'objet de l'invention est de proposer un alliage du type AA6013 avec un niveau de Cu réduit, ciblant 355 MPa de Rm à l'état T6 et une bonne résistance à la corrosion intergranulaire. La composition revendiquée est la suivante: 0.8-1.3% Si; 0.2-0.45% Cu ; 0.5-1.1% Mn; 0.45-1.0% Mg.

Notons enfin que dans la plupart des exemples précités, l'obtention des caractéristiques mécaniques ($Rp_{0,2}$, Rm) élevées est atteinte en ayant recours à des alliages contenant au moins 0,5% de cuivre.

On connait par ailleurs des pièces structurales pour application automobile en alliage 7xxx telles que décrites par exemple dans la demande EP 2 581 218.

En outre, pour la réalisation en alliage d'aluminium de pièces de géométrie complexe, comme notamment une doublure de portière, non réalisable par emboutissage conventionnel avec les alliages précités, différentes solutions ont été envisagées et/ou mises en œuvre par le passé :

- Contourner la difficulté liée à l'emboutissage en réalisant ce type de pièces par moulage et notamment du type « Sous-Pression ». En témoigne le brevet EP 1 305 179 B1 de Nothelfer GmbH sous priorité de 2000.
- Pratiquer un emboutissage dit « à tiède » pour bénéficier d'une meilleure aptitude à l'emboutissage. Cela consiste à chauffer le flan en alliage d'aluminium, totalement ou localement à une température dite intermédiaire, soit de 150 à 350°C, pour améliorer son comportement sous la presse dont l'outillage peut également être préchauffé. Le brevet EP 1 601 478 B1 de la demanderesse, sous priorité de 2003, repose sur cette solution.
- Modifier, via sa composition, l'aptitude à l'emboutissage de l'alliage de la série AA5xxx lui-même ; il a été notamment proposé d'augmenter la teneur en magnésium au-delà de 5%. Mais ceci n'est pas neutre en termes de résistance à la corrosion.
- Utiliser des tôles composites constituées d'une âme en alliage de la série AA5xxx, à teneur en Mg au-delà de 5% pour une meilleure formabilité, et d'une tôle de placage en alliage résistant mieux à la corrosion. Mais la résistance à la corrosion en bords de tôle, dans les zones poinçonnées ou plus généralement où l'âme est exposée, et notamment dans les assemblages, peut alors s'avérer insuffisante.
- Enfin procéder à un laminage asymétrique afin de créer une texture cristallographique plus favorable a également été proposé. En témoigne la demande JP 2003-305503 de Mitsubishi Aluminium). Mais l'industrialisation de ce type de laminage asymétrique est délicate, requiert des laminoirs spécifiques, peut avoir un impact défavorable sur l'aspect de surface des tôles obtenues, et peut aussi engendrer des surcoûts importants.

Compte tenu du développement croissant de l'utilisation des tôles en alliage d'aluminium pour les composants de carrosserie automobile et des productions de grande série, il existe toujours une demande de nuances encore améliorées permettant de réduire les épaisseurs sans altérer les autres propriétés de façon à toujours accroître l'allégement.

Bien évidemment, cette évolution passe par l'utilisation d'alliages à limite d'élasticité de plus en plus élevée, et la solution consistant à utiliser des alliages de la série AA6xxx de plus en plus résistants, mis en forme à l'état T4, c'est à dire après mise en solution et trempe, et durcissant fortement lors des opérations de pré-revenu et cuisson des peintures et vernis, atteint ses limites. Elle débouche sur des alliages de plus en plus durs dès l'état T4 et qui, de ce fait, posent de sérieux problèmes de mise en forme.

**Problème posé**

L'invention vise à obtenir un excellent compromis entre formabilité à l'état T4 et résistance mécanique élevée ainsi que bon comportement au rivetage et au « crash » du composant fini, en proposant un procédé de fabrication de tels composants par mise en forme à l'état métallurgique T4 après maturation à l'ambiante, suivie d'un durcissement par revenu sur pièce mise en forme et d'une cuisson des peintures ou « bake hardening ».
Ces composants doivent en outre présenter une très bonne résistance à la corrosion et un bon comportement dans les divers procédés d'assemblage tels que le soudage par points, le soudage laser, le collage, le clinchage ou le rivetage.

**Objet de l'invention**

L'invention a pour objet un procédé de fabrication d'un composant mis en forme, notamment embouti, de carrosserie ou structure de caisse automobile encore appelée « caisse en blanc » en alliage d'aluminium, comprenant les étapes suivantes :

- Fabrication d'une tôle ou bande d'épaisseur comprise entre 1 et 3,5 mm en alliage de composition (% en poids) : Si : 0,60 - 0,85 ; Fe : 0,05 - 0,25 ; Cu : 0,05 - 0,30 ; Mn : 0,05 - 0,30 ; Mg : 0,50 - 1,00 ; Ti : 0,02 - 0,15 ; V : 0,00 - 0,15 autres éléments < 0,05 chacun et < 0,15 au total, reste aluminium, avec Mg < -2,67 x Si +2,87,
- Traitement thermique de mise en solution, trempe et pré-revenu éventuel à une température comprise généralement entre 50 et 100 °C pendant une durée d'au moins 12 heures, et typiquement obtenu par bobinage à une température d'au moins 60°C suivi du refroidissement à l'air libre,
- Maturation à température ambiante typiquement entre 72 heures et 6 mois,
- Mise en forme, notamment par emboutissage sous presse, pour obtenir une pièce tridimensionnelle,
- Revenu sur pièce à une température de substantiellement 205°C avec un temps de maintien compris entre 180 et 480 minutes, et de préférence entre 240 et 480 minutes, ou revenu à temps-température équivalent,
- Peinture et « revenu de cuisson des peintures » ou « bake hardening » à une température de 150 à 190 °C et de préférence de 170 à 190°C pendant 15 à 30 min.
  On entend par pièce tridimensionnelle une pièce pour laquelle il n'existe aucune direction dans laquelle la section transverse de ladite pièce est constante selon toute ladite direction.

Selon un mode avantageux, le composant obtenu par le procédé ci-dessus présente, après maturation, revenu et traitement de cuisson des peintures, une limite d'élasticité $Rp_{0,2}$ déterminée selon la norme NF EN ISO 6892-1, d'au moins 260 MPa et/ou un « angle de pliage trois points » anorm, mesuré selon la norme NF EN ISO 7438 et les procédures VDA 238-100 et VDA 239-200, d'au moins 90° et de préférence d'au moins 100°.
Enfin, l'invention englobe également un composant embouti de carrosserie ou structure de caisse automobile encore appelée « caisse en blanc » tel que notamment une doublure ou un renfort de porte, de capot, de hayon, de pavillon, ou encore les longerons, les tabliers, les planchers de charges, les tunnels et les pieds ou montants avant, milieu et arrière, ainsi que les absorbeurs de choc ou « crashboxes ».

**Description des figures**

La figure 1 représente le dispositif pour « test de pliage trois points » constitué de deux rouleaux R, d'un poinçon B de rayon r pour procéder au pliage de la tôle T d'épaisseur t.
La figure 2 représente la tôle T après test de « pliage trois points » avec l'angle interne $\beta$ et l'angle externe, résultat mesuré du test : $\alpha$.
La figure 3 représente les caractéristiques mécaniques en traction, avec pour chaque groupe d'histogrammes, de gauche à droite $Rp_{0,2}$ en MPa, A80 en %, Rm en Mpa, pour, toujours de gauche à droite, des tôles après traitement de revenu selon l'invention (Revenu), après revenu + cuisson des peintures (Revenu + PB) et avec pré-déformation en traction de 2%, revenu et cuisson, des peintures (2% + Revenu + PB).

**Description de l'invention**

L'invention repose sur la constatation faite par la demanderesse qu'il est tout à fait possible, grâce à une composition et un procédé de fabrication adaptés, d'obtenir des tôles possédant une excellente aptitude à l'emboutissage après mise en solution, trempe et maturation à l'ambiante, et une résistance mécanique suffisante à l'état revenu et après traitement de cuisson des peintures, typiquement et respectivement pendant 4 h et 20 min à 205°C et 180°C, tout en garantissant une aptitude au rivetage et un comportement au crash du composant fini très satisfaisants. Les caractéristiques mécaniques atteintes dans ce dernier état métallurgique sont une limite d'élasticité $Rp_{0,2} \geq 260$ MPa, une résistance à la rupture Rm $\geq$ 290 MPa, un allongement à rupture $A_{80} \geq 10\%$, ainsi qu'un angle de pliage $\alpha$norm sans fissure $\geq 90°$ et de préférence $\geq 100°$.

La composition de l'alliage selon l'invention est la suivante (% en poids) : Si : 0,60 - 0,85 ; Fe : 0,05 - 0,25 ; Cu : 0,05 - 0,30 ; Mn : 0,05 - 0,30 ; Mg : 0,50 - 1,00 ; Ti : 0,02 - 0,15 ; V : 0,00 - 0,15 autres éléments < 0,05 chacun et < 0,15 au total, reste aluminium, avec Mg < -2,67 x Si +2,87

Les plages de concentration imposées aux éléments constitutifs de ce type d'alliage s'expliquent de ce fait par les raisons suivantes :

Si : Le silicium est, avec le magnésium, le premier élément d'alliage des systèmes aluminium-magnésium-silicium (famille AA6xxx) pour former les composés intermétalliques $Mg_2Si$ ou $Mg_5Si_6$ qui contribuent au durcissement structural de ces alliages. La présence de silicium, à une teneur comprise entre 0,60% et 0,85%, combinée à la présence de magnésium, à une teneur comprise entre 0,50% et 1,00%, avec Mg < -2,67 x Si + 2,87, permet d'obtenir le ratio Si/Mg requis pour atteindre les propriétés mécaniques recherchées tout en garantissant une bonne résistance à la corrosion et une mise en forme en emboutissage à température ambiante satisfaisante. En effet, si Mg > -2,67 x Si + 2,87 pour les teneurs en silicium et magnésium selon l'invention, les alliages ne pourront généralement pas être mis en solution, ce qui de fait nuira au compromis recherché.
La fourchette de teneur la plus avantageuse pour le silicium est de 0,60 à 0,75%.

Mg : Généralement, le niveau de caractéristiques mécaniques des alliages de la famille des AA6xxx augmente avec la teneur en magnésium. Combiné au silicium pour former les composés intermétalliques $Mg_2Si$ ou $Mg_5Si_6$, le magnésium contribue à l'accroissement des propriétés mécaniques. Une teneur minimum de 0,50% est nécessaire pour obtenir le niveau de caractéristiques mécaniques requis et former suffisamment de précipités durcissants. Au-delà de 1,00%, le ratio Si/Mg obtenu est défavorable au compromis de propriétés recherchées.
La fourchette de teneur la plus avantageuse pour le magnésium est de 0,60 à 0,70%.

Fe : Le fer est généralement considéré comme une impureté indésirable ; la présence de composés intermétalliques contenant du fer est en général associée à une diminution de la formabilité. De façon surprenante, les présents inventeurs ont constaté qu'une teneur au-delà de 0,05%, et mieux 0,10%, améliore la ductilité et la formabilité notamment en retardant la rupture lors de la déformation après striction. Bien qu'ils ne soient pas liés à cette hypothèse les présents inventeurs pensent que cette effet surprenant pourrait provenir notamment de la diminution sensible de la solubilité du manganèse en solution solide quand cet élément est présent et/ou de la formation d'une forte densité de particules intermétalliques garantissant une bonne « écrouissabilité » au cours de la mise en forme. Dans ces teneurs le fer peut également contribuer au contrôle de la taille des grains. Au-delà d'une teneur de 0,25%, trop de particules intermétalliques sont créées avec un effet néfaste sur la ductilité et la résistance à la corrosion.
La fourchette de teneur la plus avantageuse est de 0,05 à 0,20%.

Mn : sa teneur est limitée à 0,30%. Une addition de manganèse au-delà de 0,05% accroît les caractéristiques mécaniques par effet de solution solide, mais au-delà de 0,30%, elle ferait très fortement décroitre la sensibilité à la vitesse de déformation et donc la ductilité.
Une fourchette avantageuse pour le manganèse est de 0,10 à 0,15%

Cu : Dans les alliages de la famille des AA6000, le cuivre est un élément durcissant efficace en participant à la précipitation durcissante. A une teneur minimum de 0,05%, sa présence permet d'obtenir des caractéristiques mécaniques plus élevées. Dans l'alliage considéré, le cuivre au-delà de 0,30% a une influence négative sur la résistance à la corrosion intergranulaire. De préférence, la teneur en cuivre est au plus de 0,20%.
La fourchette de teneur la plus avantageuse pour le cuivre est de 0,08 à 0,15%.

V et Ti : chacun de ces éléments, pour Ti à une teneur de 0,02% au minimum, peut favoriser un durcissement par solution solide conduisant au niveau de caractéristiques mécaniques requis et chacun de ces éléments a de plus un effet favorable sur la ductilité en service et la résistance à la corrosion. Par contre, une teneur maximum de 0,15% pour Ti comme pour V est requise pour éviter les conditions de formation des phases primaires lors de la coulée verticale, qui ont un effet néfaste sur l'ensemble des propriétés revendiquées. La fourchette de teneur la plus avantageuse est de 0,03 à 0,10% pour Ti et 0,05 à 0,10% pour V.

Les autres éléments sont typiquement des impuretés dont la teneur est maintenue inférieure à 0,05 % ; le reste est l'aluminium. Parmi les impuretés on peut citer par example Cr, Ni, Zn, Zr et Pb. De préférence, certaines impuretés sont maintenues à des teneurs encore plus basses. Ainsi, la teneur en Ni et Zr est avantageusement maintenue inférieure à 0,03 % et la teneur en Pb est avantageusement maintenue inférieure à 0,02 %.

Le procédé de fabrication des tôles selon l'invention comporte typiquement la coulée d'une plaque, le scalpage de cette plaque, suivi de son homogénéisation avantageusement avec une vitesse de montée en température d'au moins 30°C/h jusqu'à une température de 530 à 570°C avec un maintien entre 2 et 12 h, préférentiellement entre 4 et 6 h, suivi d'un refroidissement, soit jusqu'à température ambiante, soit jusqu'à température de début de laminage à chaud.

S'ensuit, après réchauffage dans le cas d'un refroidissement jusqu'à température ambiante après homogénéisation, le laminage à chaud de la plaque en une bande d'épaisseur comprise entre 3,5 et 10 mm, le laminage à froid jusqu'à l'épaisseur finale typiquement comprise entre 1 et 3,5 mm, la mise en solution de la bande laminée à une température au-delà de la température de solvus de l'alliage, tout en évitant une fusion locale ou la brûlure, soit entre 540 et 570°C pendant 10 s à 30 min, la trempe à une vitesse de plus de 30°C/s et mieux d'au moins 100°C/s.

S'ensuit éventuellement un pré-revenu, c'est-à-dire un traitement à une température comprise entre 50 et 100 °C pendant une durée d'au moins 12 heures, typiquement obtenu par bobinage à une température d'au moins 60°C suivi du refroidissement à l'air libre, puis une maturation à température ambiante pendant 72 h à 6 mois.

Ainsi, les tôles selon l'invention présentent une très bonne aptitude à l'emboutissage.

Les tôles subissent ensuite les opérations de :

- Mise en forme, notamment par emboutissage sous presse pour obtenir une pièce tridimensionnelle,
- Traitement thermique à une température de substantiellement 205°C avec un temps de maintien compris entre 180 et 480 minutes, et de préférence entre 240 et 480 minutes, ou revenu à temps-température équivalent teq-Teq selon l'équation :

$$\int_0^t \exp\left(\frac{-Q}{RT}\right)\,dt = \int_0^{t_{eq}} \exp\left(\frac{-Q}{RT_{eq}}\right)\,dt$$

où Q vaut sensiblement 82915 J, dans laquelle T est la température instantanée exprimée en Kelvin qui évolue avec le temps t et $T_{eq}$ est la température de référence de 205 °C (478 K), et teq est le temps équivalent. De préférence le revenu est réalisé à une température comprise entre 160°C et 220°C et de manière préférée entre 200°C et 210 °C avec un temps de maintien compris entre 60 et 640 minutes, le temps équivalent pour une température de référence $T_{eq}$ = 205 °C étant compris entre 180 et 480 minutes et de préférence entre 240 et 480 minutes.

- Peinture et « revenu de cuisson des peintures » ou « bake hardening » à une température de 150 à 190 °C et de préférence de 170 à 190°C pendant 15 à 30 min.

Les composants ainsi fabriqués présentent, en service, après mise en forme, revenu optimisé sur pièce, assemblage et cuisson des peintures, des propriétés mécaniques élevées, un très bon comportement au crash et une bonne tenue à la corrosion.

Dans ses détails, l'invention sera mieux comprise à l'aide des exemples ci-après, qui n'ont toutefois pas de caractère limitatif.

**Exemples**

**Préambule**

Le Tableau 1 récapitule les compositions chimiques nominales (% en poids) des alliages utilisés lors des essais. La teneur des autres éléments était < 0,05.

**Tableau 1**

| Composition | Si | Fe | Cu | Mn | Mg | Ti | V | -2,67 x Si + 2,87 |
|---|---|---|---|---|---|---|---|---|
| Invention 1 | 0.65 | 0.19 | 0.15 | 0.19 | 0.65 | 0.05 | 0.08 | 1.13 |
| Invention 2 | 0.63 | 0.15 | 0.15 | 0.20 | 0.65 | 0.05 | 0.08 | 1.19 |
| Invention 3 | 0.70 | 0.15 | 0.11 | 0.13 | 0.65 | 0.02 | - | 1.00 |

(suite)

| Composition | Si | Fe | Cu | Mn | Mg | Ti | V | -2,67 x Si + 2,87 |
|---|---|---|---|---|---|---|---|---|
| Invention 31 | 0.62 | 0.23 | 0.18 | 0.17 | 0.63 | 0.03 | - | 1.21 |
| Invention 4 | 0.65 | 0.15 | 0.15 | 0.20 | 0.97 | 0.05 | 0.05 | 1.13 |
| Invention 5 | 0.71 | 0.15 | 0.15 | 0.20 | 0.71 | 0.02 | 0.01 | 0.97 |
| Invention 6 | 0.80 | 0.14 | 0.14 | 0.20 | 0.54 | 0.02 | - | 0.73 |
| Alliage 7 | 0.90 | 0.24 | 0.09 | 0.17 | 0.41 | 0.02 | - | 0.47 |
| Alliage 8 | 0.56 | 0.24 | 0.09 | 0.13 | 0.53 | 0.02 | - | 1.37 |
| Alliage 9 | 0.67 | 0.30 | 0.09 | 0.15 | 0.64 | 0.02 | - | 1.08 |
| Alliage 10 | 1.00 | 0.24 | 0.17 | 0.17 | 0.60 | 0.02 | - | 0.20 |

Les plaques de laminage de ces différents alliages ont été obtenues par coulée semi-continue verticale. Après scalpage, ces différentes plaques ont subi un traitement thermique d'homogénéisation et/ou de réchauffage dont les températures sont données dans le Tableau 2.

Les plaques de composition 1, 2, 7 et 8 ont subi un traitement d'homogénéisation à 530°C consistant en une montée en température à une vitesse de 30°C/h jusqu'à 530°C et un maintien de l'ordre de 3 heures à cette température. Cette étape d'homogénéisation est directement suivie d'une étape de laminage à chaud.

Les plaques de composition 3, 31 et 9 ont subi un traitement d'homogénéisation à 540°C consistant en une montée en température à une vitesse de 30°C/h jusqu'à 540°C, un maintien de l'ordre de 5 heures à cette température directement suivi du laminage à chaud.

Les plaques de composition 4, 5 et 6 ont subi une homogénéisation consistant en une montée à 570°C avec maintien minimum de 2 heures à cette température, directement suivi du laminage à chaud.

La plaque de composition 10 a subi un traitement d'homogénéisation à 550°C consistant en une montée en température à une vitesse de 30°C/h jusqu'à 550°C, un maintien de l'ordre de 4 heures à cette température. Cette étape d'homogénéisation est directement suivie d'une étape de laminage à chaud.

L'étape suivante de laminage à chaud a lieu sur un laminoir réversible suivi selon les cas d'un laminoir tandem à chaud à 4 cages jusqu'à une épaisseur comprise entre 3,5 et 10 mm. Les épaisseurs de sortie de laminage à chaud des cas testés sont données dans le Tableau 2.

Elle est suivie d'une étape de laminage à froid qui permet d'obtenir des tôles d'épaisseurs comprises entre 2.0 et 2.5 mm. Les épaisseurs de sortie de laminage à froid des cas testés sont données dans le Tableau 2 ci-après.

Les étapes de laminage sont suivies d'une étape de traitement thermique de mise en solution et trempe. La mise en solution se fait à une température au-delà de la température de solvus de l'alliage, tout en évitant la brûlure. La tôle mise en solution est ensuite trempée à une vitesse minimum de 30°C/s.

Pour tous les cas, excepté les cas 2, 4, 5 et 6, cette étape se fait en four à passage par élévation de la température du métal jusqu'à température de mise en solution en moins d'une minute environ directement suivie par une trempe.

Pour les cas 2, 4, 5 et 6, la mise en solution se fait en four à air avec introduction en four chaud, atteinte de la température de mise en solution en moins de 20 minutes et maintien à cette température pendant 30 minutes.

Cette étape de mise en solution est suivie d'une trempe par immersion dans de l'eau à 85°C.

La trempe est suivie d'un traitement thermique de pré-revenu, destiné à améliorer les performances du durcissement lors de la cuisson des peintures.

Pour tous les cas testés, excepté les cas 2, 4, 5 et 6, cette étape est réalisée par bobinage à une température d'au moins 60°C suivi du refroidissement à l'air libre. Pour les cas 2, 4, 5 et 6, le pré-revenu est obtenu par immersion et maintien des tôles dans l'eau à 85°C pendant 8 heures. Dans tous les cas une maturation à température d'au moins 72 heures a ensuite été réalisée.

**Tableau 2**

| Composition | Homogénéisation | Epaisseur sortie LAC | Epaisseur sortie LAF |
|---|---|---|---|
| Invention 1 | 530°C | 10 mm | 2.5 mm |
| Invention 2 | 530°C | 10 mm | 2.5 mm |
| Invention 3 | 540°C | 6.3 mm | 2.0 mm |

(suite)

| Composition | Homogénéisation | Epaisseur sortie LAC | Epaisseur sortie LAF |
|---|---|---|---|
| Invention 31 | 540°C | 4.3 mm | 2.5 mm |
| Invention 4 | 570°C | 10 mm | 2.5 mm |
| Invention 5 | 570°C | 10 mm | 2.5 mm |
| Invention 6 | 570°C | 10 mm | 2.5 mm |
| Alliage 7 | 530°C | 6.3 mm | 2.0 mm |
| Alliage 8 | 530°C | 4.3 mm | 2.0 mm |
| Alliage 9 | 540°C | 10 mm | 2.5 mm |
| Alliage 10 | 550°C | 5.0 mm | 2.3 mm |

Les étapes de mise en solution, trempe, pré-revenu et maturation à température ambiante pendant un temps minimum de 72 h sont suivies de traitements thermiques, dits revenus, tels que décrits dans le Tableau 3.

Après revenu, l'ensemble des cas testés subissent un traitement thermique de simulation de la cuisson des peintures en four à air avec introduction en four chaud et maintien pendant 20 min à 185°C.

**Tableau 3**

| Numéro d'essai | Composition | Revenus | Temps [min] | Température [°C] |
|---|---|---|---|---|
| 1 | Invention 1 | Revenu E | 120 | 205 |
| **2** | **Invention 1** | **Invention B** | **480** | **205** |
| 3 | Invention 1 | Revenu F | 960 | 205 |
| **4** | **Invention 2** | **Invention A** | **240** | **205** |
| **5** | **Invention 3** | **Invention A** | **240** | **205** |
| **6** | **Invention 4** | **Invention A** | **240** | **205** |
| **7** | **Invention 5** | **Invention A** | **240** | **205** |
| **8** | **Invention 6** | **Invention A** | **240** | **205** |
| 9 | Alliage 7 | Revenu D | 60 | 205 |
| 10 | Alliage 7 | Invention B | 480 | 205 |
| 11 | Alliage 8 | Revenu E | 120 | 205 |
| 12 | Alliage 8 | Invention A | 240 | 205 |
| 13 | Alliage 9 | Revenu E | 120 | 205 |
| 14 | Alliage 9 | Revenu F | 960 | 205 |
| 14 | Alliage 10 | Revenu C | 30 | 205 |
| 16 | Alliage 10 | Revenu G | 1920 | 205 |
| **17** | **Invention 31** | **Invention A** | **240** | **205** |

**Essais de traction**

Les essais de traction à température ambiante ont été réalisés selon la norme NF EN ISO 6892-1 avec des éprouvettes non proportionnelles, de géométrie largement utilisée pour les tôles, et correspondant au type d'éprouvette 2 du tableau B.1 de l'annexe B de ladite norme. Ces éprouvettes possèdent notamment une largeur de 20 mm et une longueur calibrée de 120 mm.

Les résultats de ces essais de traction en termes de limite conventionnelle d'élasticité à 0.2%, $Rp_{0,2}$, et mesurée sur les tôles telles que fabriquées selon les conditions décrites au paragraphe précédent, sont donnés dans le Tableau 4 ci-après.

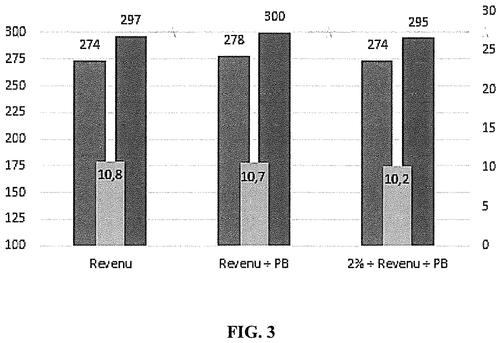

Les protocoles préconisent pour les pièces mises en forme à l'état métallurgique T4 puis subissant le traitement de cuisson des peintures, de réaliser entre la maturation et la cuisson des peintures une pré-déformation en traction contrôlée de 2%, pour simuler la mise en forme par emboutissage. Dans le cas du traitement de revenu après maturation selon l'invention, cette pré-déformation n'a pas d'effet significatif sur les caractéristiques en traction du composant final, comme le montre la figure 3.

On peut donc considérer que les caractéristiques en traction des tôles à l'état métallurgique final ne sont pas significativement différentes de celles du composant embouti fini.

## Evaluation du comportement au crash

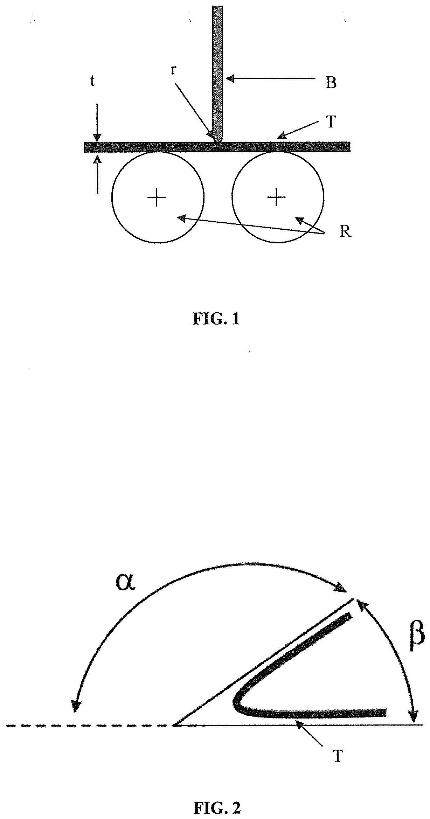

Le comportement au crash peut être estimé par un « test de pliage trois points » suivant la norme NF EN ISO 7438 et les procédures VDA 238-100 et VDA 239-200. Le dispositif de pliage est tel que présenté en figure 1. On effectue le « pliage trois points » proprement dit en utilisant un poinçon B de rayon r = 0.4 mm, la tôle étant supportée par deux rouleaux R, l'axe de pliage étant parallèle à la direction de laminage. Les rouleaux ont un diamètre de 30 mm et la distance entre les axes des rouleaux est égale à 30 + 2t mm, t étant l'épaisseur de la tôle testée T.

Au début de l'essai le poinçon est mis en contact avec la tôle avec une pré-force de 30 Newtons. Une fois le contact établi, le déplacement du poinçon est indexé à zéro. Le test consiste alors à déplacer le poinçon de manière à effectuer le « pliage trois points » de la tôle.

Le test s'arrête lorsqu'une micro fissuration de la tôle conduit à une chute de force sur le poinçon d'au moins 30 Newtons, ou bien lorsque le poinçon s'est déplacé de 14,2 mm, ce qui correspond à la course maximale autorisée.

A la fin du test, l'échantillon de tôle se retrouve donc plié comme illustré en figure 2. La ductilité en service s'évalue alors par la mesure de l'angle de pliage a. Plus l'angle $\alpha$ est élevé, meilleure est l'aptitude au crash ou au pliage de la tôle. Afin de pouvoir comparer les performances des cas testés l'ensemble des angles mesurés pour différentes épaisseurs de tôle sont ramenés à la valeur anorm, selon la formule ci-après telle que décrite dans la norme VDA 239-200 :

$$\alpha_{norm} = \alpha_m \frac{\sqrt{t_m}}{\sqrt{t_{ref}}}$$

avec :

$\alpha_{norm}$ : angle normalisé,
$\alpha_m$ : angle mesuré,
$t_{ref}$ : épaisseur de référence,
$t_m$ : épaisseur mesurée.

Les résultats de ces essais de pliage sur les tôles telles que fabriquées selon les conditions décrites au paragraphe « Préambule », sont donnés dans le Tableau 4 ci-après, selon le même ordre que dans le Tableau 3. L'épaisseur de référence $t_{ref}$ était de 2,0 mm.

Les protocoles préconisent pour les pièces mises en forme à l'état métallurgique T4 puis subissant le traitement de cuisson des peintures, de réaliser entre la maturation et la cuisson des peintures une pré-déformation en traction contrôlée de 10%, pour simuler la mise en forme par emboutissage. Dans le cas du traitement de revenu après maturation selon l'invention, cette pré-déformation n'a pas d'effet très significatif sur les caractéristiques du composant final.

On peut donc considérer que le comportement en pliage des tôles à l'état métallurgique final n'est pas significativement différent de celui du composant embouti fini.

**Tableau 4**

| Numéro d'essai | Composition | Rp0.2 [MPa] | $\alpha$ norm [°] |
|---|---|---|---|
| 1 | Invention 1 | 285 | 72 |
| **2** | **Invention 1** | **263** | **98** |
| 3 | Invention 1 | 235 | 113 |
| **4** | **Invention 2** | **287** | **109** |
| **5** | **Invention 3** | **265** | **93** |

(suite)

| Numéro d'essai | Composition | Rp0.2 [MPa] | $\alpha$ norm [°] |
|:---:|:---:|:---:|:---:|
| **6** | **Invention 4** | **312** | **98** |
| **7** | **Invention 5** | **295** | **103** |
| **8** | **Invention 6** | **275** | **99** |
| 9 | Alliage 7 | 249 | 70 |
| 10 | Alliage 7 | 218 | 93 |
| 11 | Alliage 8 | 249 | 91 |
| 12 | Alliage 8 | 238 | 99 |
| 13 | Alliage 9 | 268 | 61 |
| 14 | Alliage 9 | 209 | 103 |
| 14 | Alliage 10 | 290 | 75 |
| 16 | Alliage 10 | 239 | 91 |
| **17** | **Invention 31** | **261** | **94** |

On y révèle clairement que seules les compositions et les revenus selon l'invention, en gras, permettent d'atteindre le compromis recherché soit une limite d'élasticité $Rp_{0,2} \geq 260$ MPa, ainsi qu'un angle de pliage anorm sans fissure $\geq 90°$.

**Revendications**

1. Procédé de fabrication d'un composant embouti de carrosserie ou structure de caisse automobile encore appelée « caisse en blanc » en alliage d'aluminium destiné à absorber de l'énergie de façon irréversible lors d'un choc, comprenant les étapes suivantes :

   - Fabrication d'une tôle ou bande d'épaisseur comprise entre 1 et 3,5 mm en alliage de composition (% en poids) : Si : 0,60 - 0,85 ; Fe : 0,05 - 0,25 ; Cu : 0,05 - 0,30 ; Mn : 0,05 - 0,30 ; Mg : 0,50 - 1,00 ; Ti : 0,02 - 0,15 ; V : 0,00 - 0,15 autres éléments < 0,05 chacun et < 0,15 au total, reste aluminium, avec Mg < -2,67 x Si + 2,87,
   - Traitement thermique de mise en solution, trempe et pré-revenu éventuel à une température comprise entre 50 et 100 °C pendant une durée d'au moins 12 heures, typiquement obtenu par bobinage à une température d'au moins 60°C suivi du refroidissement à l'air libre,
   - Maturation à température ambiante typiquement entre 72 heures et 6 mois,
   - Mise en forme par emboutissage sous presse pour obtenir une pièce tridimensionnelle,
   - Revenu sur pièce à une température de substantiellement 205°C avec un temps de maintien compris entre 180 et 480 minutes ou revenu à temps-température équivalent,
   - Peinture et « revenu de cuisson des peintures » ou « bake hardening » à une température de 150 à 190 °C et de préférence de 170 à 190°C pendant 15 à 30 min.

2. Procédé selon la revendication 1 **caractérisé en ce que** le temps de maintien du revenu à 205°C est compris entre 240 et 480 minutes ou à temps-température équivalent.

3. Procédé selon l'une des revendications 1 ou 2 **caractérisé en ce que** la teneur en Si de la tôle ou bande est comprise entre 0,60 et 0,75.

4. Procédé selon l'une des revendications 1 à 3 **caractérisé en ce que** la teneur en Fe de la tôle ou bande est comprise entre 0,05 et 0,20.

5. Procédé selon l'une des revendications 1 à 4 **caractérisé en ce que** la teneur en Cu de la tôle ou bande est au plus de 0,20 et de préférence comprise entre 0,08 et 0,15.

**6.** Procédé selon l'une des revendications 1 à 5 **caractérisé en ce que** la teneur en Mn de la tôle ou bande est comprise entre 0,10 et 0,15.

**7.** Procédé selon l'une des revendications 1 à 6 **caractérisé en ce que** la teneur en Mg de la tôle ou bande est comprise entre 0,60 et 0,70.

**8.** Procédé selon l'une des revendications 1 à 7 **caractérisé en ce que** la teneur en Ti de la tôle ou bande est comprise entre 0,03 et 0,10.

**9.** Procédé selon l'une des revendications 1 à 8 **caractérisé en ce que** la teneur en V de la tôle ou bande est comprise entre 0,05 et 0,10.

**10.** Procédé selon l'une des revendications 1 à 9 **caractérisée en ce que** la fabrication de la tôle ou bande avant emboutissage comporte les étapes suivantes :

   - la coulée typiquement semi-continue verticale d'une plaque et son scalpage,
   - l'homogénéisation de cette plaque à une température de 530 à 570°C avec un maintien entre 2 et 12 h, préférentiellement entre 4 et 6 h,
   - le laminage à chaud de la plaque en une bande d'épaisseur comprise entre 3,5 et 10 mm,
   - le laminage à froid jusqu'à l'épaisseur finale.

**11.** Composant embouti de carrosserie ou structure de caisse automobile encore appelée « caisse en blanc » élaboré par un procédé selon l'une des revendications 1 à 10, **caractérisé en ce que** sa limite d'élasticité, déterminée selon la norme NF EN ISO 6892-1, est ≥ 260 MPa.

**12.** Composant embouti de carrosserie ou structure de caisse automobile encore appelée « caisse en blanc » élaboré par un procédé selon l'une des revendications 1 à 10, **caractérisé en ce que** son « angle de pliage trois points » anorm, déterminé suivant la norme NF EN ISO 7438 et les procédures VDA 238-100 et VDA 239-200, est d'au moins 90°.

**13.** Composant embouti de carrosserie ou structure de caisse automobile encore appelée « caisse en blanc », selon l'une des revendications 11 ou 12, **caractérisée en ce qu'**elle est choisie dans le groupe contenant notamment les doublures ou renforts de porte, de capot, de hayon, de pavillon, ou encore les longerons, les tabliers, les planchers de charges, les tunnels et les pieds avant, milieu et arrière, ainsi que les absorbeurs de choc ou « crashboxes ».

**Patentansprüche**

**1.** Verfahren zur Herstellung eines Tiefziehbauteils einer Kraftfahrzeugkarosserie oder -karosseriestruktur, auch "Rohkarosserie" genannt, aus Aluminiumlegierung zur irreversiblen Energieaufnahme bei einem Aufprall mit folgenden Schritten:

   - Herstellen eines Bleches oder Bandes mit einer Dicke zwischen 1 und 3,5 mm aus einer Legierung mit der Zusammensetzung (in Gew.-%):
   Si 0,60 - 0,85; Fe 0,05 - 0,25; Cu 0,05 - 0,30; Mn 0,05 - 0,30; Mg 0,50 - 1,00; Ti 0,02 - 0,15; V 0,00 - 0,15, weitere Elemente jeweils < 0,05 und insgesamt < 0,15, Rest Aluminium, mit Mg < -2,67 x Si + 2,87,
   - Lösungsglühen, Abschrecken und eventuelles Vorauslagern bei einer Temperatur zwischen 50 und 100°C für eine Dauer von mindestens 12 Stunden, typischerweise durch Aufhaspeln bei einer Temperatur von mindestens 60°C und anschließendes Abkühlen an der Luft,
   - Alterung bei Raumtemperatur typischerweise zwischen 72 Stunden und 6 Monaten,
   - Formen durch Tiefziehen in der Presse, um ein dreidimensionales Teil zu erhalten,
   - Auslagern des Teils bei einer Temperatur von im Wesentlichen 205°C mit einer Haltezeit zwischen 180 und 480 Minuten oder Auslagern unter äquivalenten Temperatur-Zeit-Bedingungen,
   - Lackieren und "Auslagerungsbehandlung durch Lackeinbrennen" oder "bake hardening" bei einer Temperatur von 150 bis 190°C und vorzugsweise 170 bis 190°C für 15 bis 30 min.

**2.** Verfahren nach Anspruch 1, **dadurch gekennzeichnet, dass** die Haltezeit der Auslagerung bei 205°C oder unter äquivalenten Temperatur-Zeit-Bedingungen zwischen 240 und 480 Minuten liegt.

**3.** Verfahren nach einem der Ansprüche 1 oder 2, **dadurch gekennzeichnet, dass** der Si-Gehalt des Bleches oder Bandes zwischen 0,60 und 0,75 liegt.

**4.** Verfahren nach einem der Ansprüche 1 bis 3, **dadurch gekennzeichnet, dass** der Fe-Gehalt des Bleches oder Bandes zwischen 0,05 und 0,20 liegt.

**5.** Verfahren nach einem der Ansprüche 1 bis 4, **dadurch gekennzeichnet, dass** der Cu-Gehalt des Bleches oder Bandes höchstens 0,20 beträgt und vorzugsweise zwischen 0,08 und 0,15 liegt.

**6.** Verfahren nach einem der Ansprüche 1 bis 5, **dadurch gekennzeichnet, dass** der Mn-Gehalt des Bleches oder Bandes zwischen 0,10 und 0,15 liegt.

**7.** Verfahren nach einem der Ansprüche 1 bis 6, **dadurch gekennzeichnet, dass** der Mg-Gehalt des Bleches oder Bandes zwischen 0,60 und 0,70 liegt.

**8.** Verfahren nach einem der Ansprüche 1 bis 7, **dadurch gekennzeichnet, dass** der Ti-Gehalt des Bleches oder Bandes zwischen 0,03 und 0,10 liegt.

**9.** Verfahren nach einem der Ansprüche 1 bis 8, **dadurch gekennzeichnet, dass** der V-Gehalt des Bleches oder Bandes zwischen 0,05 und 0,10 liegt.

**10.** Verfahren nach einem der Ansprüche 1 bis 9, **dadurch gekennzeichnet, dass** die Herstellung des Bleches oder Bandes vor dem Tiefziehen folgende Schritte aufweist:

- das typischerweise halbkontinuierliche Vertikalstranggießen eines Walzbarrens und sein Fräsen,
- das Homogenisieren dieses Barrens bei einer Temperatur von 530 bis 570°C mit einer Haltezeit zwischen 2 und 12 h, vorzugsweise zwischen 4 und 6 h,
- das Warmwalzen des Barrens zu einem Band mit einer Dicke zwischen 3,5 und 10 mm,
- das Kaltwalzen auf die Enddicke.

**11.** Tiefziehbauteil einer Kraftfahrzeugkarosserie oder -karosseriestruktur, auch "Rohkarosserie" genannt, hergestellt durch ein Verfahren nach einem der Ansprüche 1 bis 10, **dadurch gekennzeichnet, dass** seine Dehngrenze, bestimmt nach der Norm NF EN ISO 6892-1, $\geq$ 260 MPa ist.

**12.** Tiefziehbauteil einer Kraftfahrzeugkarosserie oder -karosseriestruktur, auch "Rohkarosserie" genannt, hergestellt durch ein Verfahren nach einem der Ansprüche 1 bis 10, **dadurch gekennzeichnet, dass** sein "Drei-Punkt-Biegewinkel" anorm, bestimmt nach der Norm NF EN ISO 7438 und den Verfahren VDA 238-100 und VDA 239-200, mindestens 90° beträgt.

**13.** Tiefziehbauteil einer Kraftfahrzeugkarosserie oder -karosseriestruktur, auch "Rohkarosserie" genannt, nach einem der Ansprüche 11 oder 12, **dadurch gekennzeichnet, dass** es ausgewählt ist aus der Gruppe, die insbesondere Tür-Motorhauben-, Heckklappen-, Dachauskleidungen oder -verstärkungen, oder Längsträger, Schürzen, Ladeflächen, Tunnel und Vorder-, Mittel- und Hinterbeine, sowie Schockabsorber oder Crashboxen umfasst.

**Claims**

**1.** Method of manufacturing a stamped bodywork or structural part of a motor vehicle body, also called "body-in-white" made of aluminium alloy for irreversibly absorbing energy in the event of an impact, comprising the following steps:

- Manufacture of a sheet or strip with a thickness of between 1 and 3.5 mm made of an alloy having the composition (as percentages by weight):
Si: 0.60 - 0.85; Fe: 0.05 - 0.25; Cu: 0.05 - 0.30; Mn: 0.05 - 0.30; Mg: 0.50 - 1.00; Ti: 0.02 - 0.15; V: 0.00 - 0.15; other elements < 0.05 each and < 0.15 in total, the rest aluminium, with Mg < -2.67 x Si + 2.87,
- Solution heat-treatment, quenching and possible pre-ageing at a temperature between 50 and 100°C for a period of at least 12 hours, typically obtained by coiling at a temperature of at least 60°C followed by cooling in the open air,
- Natural ageing at room temperature typically between 72 hours and 6 months,

- Forming by press stamping to obtain a three-dimensional part,
- Artificial ageing of the part at a temperature of substantially 205°C with a holding time between 180 and 480 minutes or artificial ageing at equivalent time-temperature,
- Painting and bake hardening at a temperature of 150 to 190°C and preferably 170 to 190°C for 15 to 30 minutes.

2. Method according to claim 1 **characterized in that** the tempering time at 205°C is between 240 and 480 minutes or at an equivalent time-temperature.

3. Method according to either of claims 1 to 2, **characterized in that** the Si content of the sheet or strip is between 0.60 and 0.75.

4. Method according to one of claims 1 to 3, **characterized in that** the Fe content of the sheet or strip is between 0.05% and 0.20%.

5. Method according to one of claims 1 to 4, **characterized in that** the Cu content of the sheet or strip is at most 0.20 and preferably between 0.08 and 0.15.

6. Method according to one of claims 1 to 5, **characterized in that** the Mn content of the sheet or strip is between 0.10 and 0.15.

7. Method according to one of claims 1 to 6, **characterized in that** the Mg content of the sheet or strip is between 0.60 and 0.70.

8. Method according to one of claims 1 to 7, **characterized in that** the Ti content of the sheet or strip is between 0.03 and 0.10.

9. Method according to one of claims 1 to 8, **characterized in that** the V content of said sheet is between 0.05 and 0.10.

10. Method according to one of claims 1 to 9, **characterized in that** the manufacture of the sheet or strip before stamping comprises the following steps:

   - casting typically semi-continuous vertical of a slab and its scalping,
   - homogenization of this slab at a temperature of 530 to 570°C with a holding time between 2 and 12 h, preferably between 4 and 6 h,
   - hot rolling of the slab into a strip with a thickness of between 3.5 and 10 mm,
   - cold rolling down to the final thickness.

11. Stamped bodywork or structural part of a motor vehicle body, also called "body-in-white" prepared by a method according to one of claims 1 to 10, **characterized in that** its yield strength, determined according to standard NF EN ISO 6892-1, is $\geq$ 260 MPa.

12. Stamped bodywork or structural part of a motor vehicle body, also called "body-in-white", prepared by a method according to one of claims 1 to 10, **characterized in that** its "three-point bending angle" $\alpha$norm, determined according to standard NF EN ISO 7438 and procedures VDA 238-100 and VDA 239-200, is at least 90°.

13. Stamped bodywork or structural part of a motor vehicle body, also called "body-in-white", according to either of claims 11 or 12, **characterized in that** it is selected from the group containing in particular door, bonnet, tailgate or roof liners or reinforcements, or spars, fire walls, load floors, tunnels and front, middle and rear feet, as well as shock absorbers or "crash boxes".

**FIG. 1**

**FIG. 2**

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004113579 A1
- US 2002039664 A
- WO 03006697 A
- EP 2581218 A
- EP 1305179 B1
- EP 1601478 B1
- JP 2003305503 A

**Littérature non-brevet citée dans la description**

- **P. E. FORTIN et al.** An optimized Al alloy for Auto body sheet applications. *SAE technical conference,* Mars 1984
- **M. J. BULL et al.** Al sheet alloys for structural and skin applications. *25th ISATA symposium, Paper 920669,* Juin 1992